# EUROPEAN PATENT SPECIFICATION

(11) **EP 4 185 115 B1**
(45) Date of publication and mention of the grant of the patent: **16.09.2026**
(21) Application number: 21752183.0
(22) Date of filing: 21.07.2021
(51) Int. Cl.: A21C 9/06

(54) **APPARATUS FOR MAKING FILLED PASTA**
VORRICHTUNG ZUR HERSTELLUNG VON GEFÜLLTEN TEIGWAREN
APPAREIL POUR LA PRODUCTION DE PÂTES FARCIES

(30) Priority: 22.07.2020 IT 202000017788
(43) Date of publication of application: 31.05.2023
(73) Proprietor: Fava Societa' Per Azioni, 44042 (FE) Cento (IT)
(72) Inventor: VALESI, Silvio, 43044 Collecchio (IT)
(74) Representative: Fanzini, Valeriano
(86) International application number: PCT/IB2021/056591
(87) International publication number: WO 2022/018659

(56) References cited:
- EP-A2- 0 580 430
- EP-A2- 0 580 430
- WO-A1-2011/104564
- WO-A1-2014/115058
- WO-A1-2014/115058
- CA-A1- 2 286 524
- CN-A- 103 796 518
- CN-B- 103 717 097
- IT-A1- MI20 100 156
- US-A- 3 532 510
- US-A- 3 532 510

## Description

The present invention refers to an apparatus for obtaining a filled food product, and preferably a filled pasta, such as tortelli, ravioli or the like.

Apparatuses for obtaining tortelli, ravioli or the like are known.

According to a respective known type, said apparatuses for obtaining tortelli, ravioli or the like comprises a respective support frame, first means for feeding a first sheet, or layer, especially a first sheet of pasta, and second means for feeding a second sheet, or layer, especially a second sheet of pasta.

Further, said apparatuses already known for obtaining tortelli, ravioli or the like comprise corresponding means for dosing respective portions of filling to be housed between said first and second layers adapted to define said filled food product. Which comprise at least one respective release mouth of the corresponding portion of filling on said first sheet, or layer, of pasta.

However, in said apparatuses already known, it is not possible to guarantee, for a large number of types of fillings, in particular also for those which are more sticky and which tend not to detach or not to completely detach from said release means, the correct supply of the same filling to said outer layer or pasta, and therefore it is not possible to guarantee that said apparatuses operate in a constant and reliable manner on all the types of filled food products.

The sector further feels the need to have apparatuses available that can be easily adapted to the production needs of the moment, for example changing the number of portions of filling that are distributed.

The sector also feels the need to have apparatuses available that can be easily cleaned and/or maintained.

WO2014/115058 discloses a machine for making filled pasta comprising an ultrasound generator provided with an ultrasound emitter applied to a feed duct having an inlet and an outlet for the filling.

US3532510 discloses an unbaked filled rolls packaged in a pressure retaining container for refrigerated storage with a filling that is placed between two sheets of dough which are sealed together along a filling-free marginal edge and then rolled up into a spiral to form filled rolls.

CA2286524 discloses an apparatus for making stuffed pastas, such as ravioli, where the pasta comprises a filling, such as meat or cheese, between two pieces of dough, which comprises means for injecting an amount of filler material into a pre-formed pocket of dough.

EP0580430 discloses an apparatus for charging doses of a filling material onto pieces of dough being conveyed on a conveyor and comprising a filling-charging mechanism having discharging nozzles.

CN103796518 discloses a shutter device for producing wrapped food product.

CN103717097 discloses a shutter device for manufacturing filling-containing food products. With the present invention it is therefore wished to propose a new solution and/or an alternative to the solutions known up to now and in particular it is proposed to overcome one or more of the drawbacks or problems referred to above, and/or to satisfy one or more requirements referred to above and/or in any case experienced in the art, and in particular which can be deduced from the above.

An apparatus according to claim 1 is therefore provided.

In this way, it is possible to guarantee, for a large number of types of filling, even those that are more adhesive and tend not to detach or not to completely detach from the release means, the correct supply of the same filling to said outer layer or pasta, and thus to obtain, in a constant and reliable manner, filled food products of the most varied types or characteristics.

This and other innovative aspects or respective advantageous embodiments, are however, set forth in the appended claims, the technical characteristics of which can be found, together with corresponding advantages achieved, in the following detailed description, illustrating a purely non-limiting example of the embodiment of the invention, which is made with reference to the appended drawings, in which:
- Figure 1 illustrates a schematic cross-sectional view of a filled food product obtained by means of the present preferred embodiment of apparatus according to the present invention;
- Figure 2A illustrates a schematic perspective view of a preferred embodiment of apparatus according to the present invention;
- Figure 2B illustrates a schematic perspective view of the preferred embodiment of apparatus according to the present invention, taken from a direction opposite to that of Figure 2A;
- Figure 3 illustrates a schematic perspective view of a preferred embodiment of apparatus according to the present invention;
- Figure 4A illustrates a schematic perspective view of a preferred embodiment of the means for dosing the filling, which are preferably used in the present preferred embodiment of apparatus according to the present invention;
- Figure 4B illustrates a frontally elevated schematic view of the preferred embodiment of the means for dosing the filling, which are preferably used in the present preferred embodiment of apparatus according to the present invention;
- Figure 5A illustrates a schematic perspective sectioned view of an enlarged detail of the dosing means of the preferred embodiment of apparatus according to the present invention;
- Figure 5B illustrates a schematic perspective sectioned view of an enlarged detail of the dosing means of the preferred embodiment of apparatus according to the present invention, under a working condition different from that of Figure 5A;
- Figure 5C illustrates an enlarged detail of Figure 5A;
- Figure 6A illustrates a schematic perspective sectioned view of an enlarged detail of the collector chamber of the preferred embodiment of apparatus according to the present invention, with particular illustration of the sensor for detecting the pressure of the filling;
- Figure 6B illustrates a schematic perspective sectioned view of a further enlarged detail of the collector chamber of the preferred embodiment of apparatus according to the present invention;
- Figure 7A illustrates a schematic perspective sectioned view of an enlarged detail of the dosing means of the preferred embodiment of apparatus according to the present invention, with particular illustration of the upper part thereof;
- Figure 7B illustrates a schematic perspective sectioned view of a further enlarged detail of the upper part of said dosing means of the preferred embodiment of apparatus according to the present invention;
- Figure 8 illustrates a schematic longitudinal sectional view of an enlarged detail of the downstream area of the preferred embodiment of apparatus according to the present invention;
- Figure 9A illustrates a schematic perspective sectional view of an enlarged detail of the means defining the peripheral edge of the respective and single food product filled with the preferred embodiment of the apparatus according to the present invention, with particular illustration of the detaching means of the strip portion of filled material from the same means defining the peripheral edge;
- Figure 9B illustrates a schematic perspective sectional view of a detail of the means defining the peripheral edge of the respective and single food product filled with the preferred embodiment of apparatus according to the present invention, with particular illustration of the means for adjusting said detaching means;
- Figure 10 illustrates a schematic plan view from above of the longitudinal cutting means of the corresponding strip of filled material of the preferred embodiment of apparatus according to the present invention.

A preferred embodiment 10 of apparatus for obtaining a filled food product 11, and preferably a filled pasta, such as tortelli, ravioli or the like, is illustrated in the attached figures.

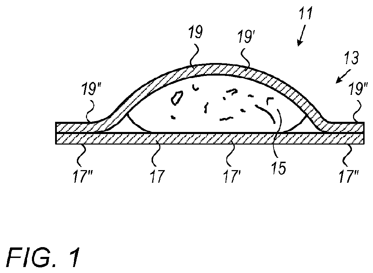

Preferably, as can be seen from Figure 1, the filled food product 11 comprises an outer layer 13 which wraps, in particular completely a corresponding portion of said filling 15.

Preferably, said outer layer 13 is defined, or consisting, of pasta or sheet of pasta, and, for example, is composed by one or more of the following ingredients: flour, in particular wheat and/or other cereal flour, eggs, salt and/or other, while said portion of filling 15 is defined by, or consisting of, a creamy product, for example composed of one or more of the following ingredients: cottage cheese, cheese, in particular a grated grana cheese, vegetables, eggs, meat, fish, breadcrumbs, salt and/or other.

As can be seen from said Figure 1, preferably, said outer layer 13 is formed by a first and a second layers 17, 19, between which said portion of filling 15 is enclosed.

In particular, as illustrated, said first and second layers 17, 19 comprise respective central parts 17', 19', between which said portion of filling 15 is interposed and corresponding peripheral edges 17", 19", which are counterfaced and joined together and which allow to define an internal space, in particular closed, 21 for housing said portion of filling 15.

As illustrated, the apparatus 10 comprises respective means, or frame, of support, 12 of the means 14 for feeding said outer layer 13 of said filled food product 11, and in particular comprising first means 16 for feeding a first sheet, or layer, especially a first sheet of pasta 27, and second means 18 for feeding a second sheet, or layer, especially a second sheet of pasta, 29.

As illustrated, the apparatus further comprises dosing means 20 of respective portions of filling 15 to be housed within respective outer layers 13 of said filled food product 11, in particular between said first and second layers 17, 19 which are adapted to said filled food product 11.

As illustrated, said dosing means 20 comprise release means, or a respective release mouth, 201 of the corresponding portion of filling 15 on the same outer layer 13 of said filled food product 11, in particular on said first sheet, or layer, or first sheet of pasta 27, of the same food product 11.

Advantageously, as illustrated, the apparatus comprises means 22 for detaching said portion of filling 15 from the respective release means, or respective release mouth, 201 of the same portion of filling 15.

In this way, it is possible to guarantee, for a large number of types of filling, in particular also for those which are more adhesive and which tend not to detach or not to completely detach from the release means, the correct supply of the same filling to said outer layer or pasta, and thus to obtain, in a constant and reliable manner, filled food products with the most varied characteristics.

According to the present invention, said detaching means 22 of said portion of filling 15 from the respective release means, or respective release mouth, 201 of the same portion of filling 15 are in the form of means which emit at least one respective puff, or jet S of pressurized fluid, in particular a puff or jet of compressed air.

As can be seen from the figures, advantageously, said dosing means 20 of respective portions of filling 15 to be housed inside the respective outer layer 13 of said filled food product 11 comprise one or more, preferably a plurality of, dosing members 201xa of respective portions of filling 15, each dosing member 201xa comprising respective release means, or release mouth, 201 of a respective portion of filling 15, which dosing members 201xa, or respective means or mouths 201, are transversely aligned with each other with respect to the longitudinal direction of extension of the apparatus. In particular, as illustrated, in this preferred embodiment, ten dosing members transversely aligned with each other are provided.

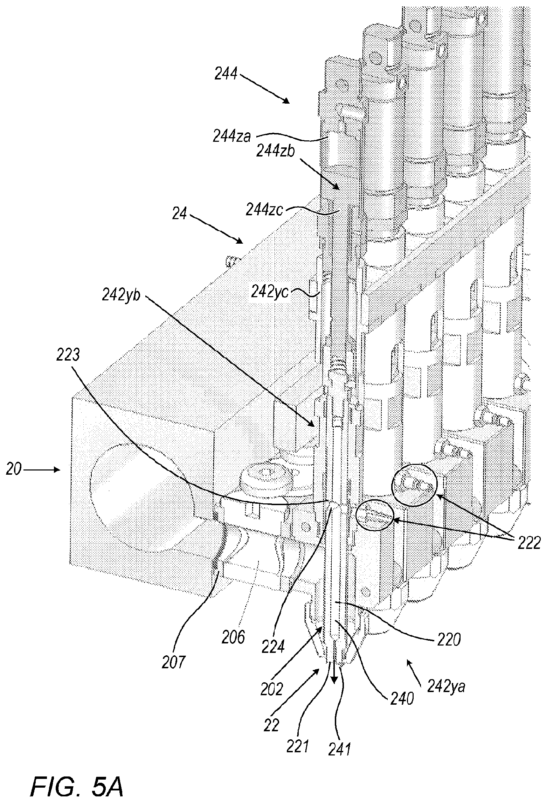

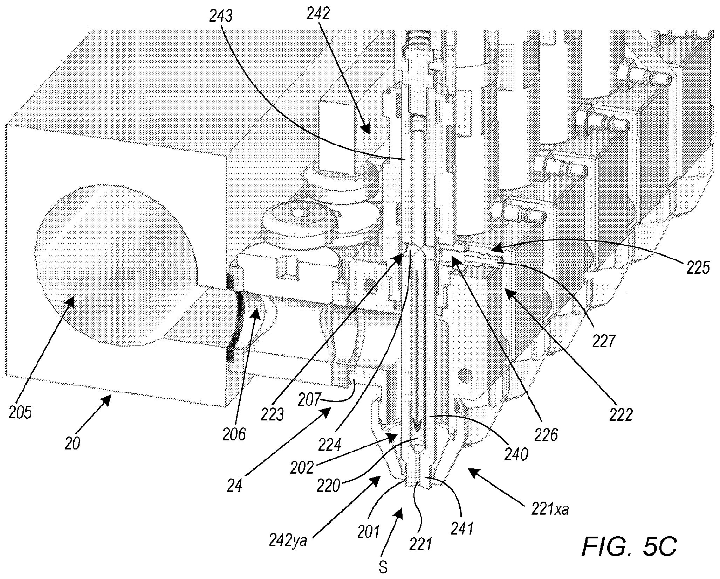

Advantageously, as can be seen from Figures 5A to 5C, said dosing means 20 of respective portions of filling 15, or the respective dosing member 201xa, comprise, or comprises, a corresponding dosing chamber 202 of said portion of filling 15 in connection, or opening, in said release means, or respective release mouth, 201 of the respective portion of filling 15.

As can be seen from said Figures 5A to 5C, with advantage, said dosing means 20 of respective portions of filling 15, or the respective dosing member 201xa, comprise, or comprises, corresponding exiting means 24 of the respective portion of filling 15 from said release means, or respective release mouth, 201 of the respective portion of filling 15.

Particularly advantageously, as can be seen from Figures 5A to 5C, said detaching means 22 of said portion of filling 15 from the respective release means, or respective release mouth, 201 of the same portion of filling 15 operate, i.e., emit a respective puff, or jet, S of pressurized fluid, in particular of compressed air, at said exiting means 24 of the respective portion of filling 15 from said release means, or respective release mouth, 201 of the respective portion of filling 15, or the respective free end of the same exiting means 24 of the respective portion of filling 15.

Advantageously, as can be seen from said figures, said dosing means 20 of respective portions of filling 15 comprise means for feeding, in particular under pressure, the filling 15 in the respective dosing chamber 202 and towards said release means, or respective release mouth, 201 of the respective portion of filling 15.

As can be seen from said Figures 5A to 5C, advantageously, said exiting means 24 of the respective portion of filling 15 from said release means, or respective release mouth, 201 of the respective portion of filling 15 are in the form of means adapted to open and respectively close said release means, or respective release mouth, 201 of the respective portion of filling 15.

With particular advantage, as can be seen from said Figures 5A to 5C, said exiting means 24 of the respective portion of filling 15, from said release means, or respective release mouth, 201 of the respective portion of filling 15, are movable between a respective opening position, in particular raised, of said release means, or respective release mouth, 201 of the respective portion of filling 15, and a respective closing position, in particular lowered, of the same release means, or respective release mouth, 201 of the respective portion of filling 15.

Advantageously, as can be seen from said Figures 5A to 5C, said exiting means 24 of the respective portion of filling 15 from said release means, or respective release mouth, 201 of the respective portion of filling 15 extend, in particular move, within, and in particular cross, said dosing chamber 202 of said portion of filling 15.

As can be seen from said Figures from 5A to 5C, with advantage, said exiting means of the respective portion of filling 15 from said release means, or respective release mouth, 201 of the respective portion of filling 15 are defined by, or are in the form of, a corresponding elongated stem 240, which, in particular, crosses said dosing chamber 202 of said portion of filling 15, and which has a respective shaped end 241, capable of engaging and closing said release means, or respective release mouth, 201 of the respective portion of filling 15.

Particularly advantageously, as can be seen from said Figures 5A to 5C, said exiting means 24 of the respective portion of filling 15 from said release means, or respective release mouth, 201 of the respective portion of filling 15 define, or comprise, said detaching means 22 of said portion of filling 15 from the respective release means, or respective release mouth 201 of the respective portion of filling 15.

Advantageously, as can be seen from said Figures 5A to 5C, said detaching means 22 of said portion of filling 15 from the respective release means, or respective release mouth, 201 of the respective portion of filling 15, in particular of the respective dosing member 201xa, comprise a respective duct 220 for conveying the puff, or jet, S of pressurized fluid, in particular of compressed air.

As can be seen from said Figures 5A to 5C, advantageously, the respective duct 220 for conveying the puff, or jet, S of pressurized fluid, in particular of compressed air, is at, or is obtained in, the respective exiting means 24 of the respective portion of filling 15 from said release means, or respective release mouth 201 of the respective portion of filling 15.

Advantageously, as can be seen from said Figures 5A to 5C, the respective duct 220 for conveying the puff, or jet, S of pressurized fluid, in particular air, opens at the end, in particular shaped, 241 of engagement and closure of said release means, or respective release mouth 201 of the respective portion of filling 15.

According to the present invention, as can be seen from said Figures 5A to 5C, the respective duct 220 for conveying the puff, or jet, S of pressurized fluid, in particular air, is coaxially obtained within the respective elongated stem 240 defining said exiting means 24 of the respective portion of filling 15 from said release means, or respective release mouth 201 of the respective portion of filling 15.

According to the present invention as can be seen from said Figures 5A to 5C, said puff, or jet, S of pressurized fluid, in particular air, is emitted when the respective elongated stem 240 defining said exiting means 24 of the respective portion of filling 15 from said release means, or respective release mouth 201 of the respective portion of filling 15, is in the position, in particular lowered, of closure of said release mouth 201 of the respective portion of filling 15.

According to the present invention said dosing means 20 of respective portions of filling 15, i.e., the respective dosing member 201xa, comprise, or comprises, a respective support block 242 for said exiting means 24 of the respective portion of filling 15 from said release means, or respective release mouth, 201 of the respective portion of filling 15, i.e., for the respective elongated stem 240.

With advantage, as can be seen from said Figures 5A to 5C, said support block 242 for said exiting means 24 of the respective portion of filling 15 from said release means, or respective release mouth 201 of the respective portion of filling 15, or for the respective elongated stem 240 defines corresponding guiding and sliding means for the same exiting means 24 of the respective portion of filling 15 from said release means, or respective release mouth 201 of the respective same portion of filling 15, in particular for said elongated stem 240.

Advantageously, as can be seen from said Figures 5A to 5C, said block 242 for guiding and sliding for said elongated stem 240 has a respective axial cavity 243 having a respective inner guiding and sliding surface for the outer surface of said exiting means 24 of the respective portion of filling 15 from said release means, or respective release mouth 201 of the respective portion of filling 15, or of said elongated stem 240.

As can be seen from said Figures 5A to 5C, in a particularly advantageous manner, said dosing chamber 202 of said portion of filling 15 is defined in a corresponding block, in particular in the lower part 242ya of said support block 242 for said exiting means 24 of the respective portion of filling 15 from said release means, or respective release mouth 201 of the respective portion of filling 15, or for the respective elongated stem 240.

With particular advantage, as can be seen from said Figures 5A to 5C, said support block 242 for said exiting means 24 of the respective portion of filling 15 from said release means, or respective release mouth 201 of the respective portion of filling 15, or for the respective elongated stem 240, comprises a respective intermediate support and sliding part 242yb for said exiting means 24 of the respective portion of filling 15, or for said elongated stem 240, in particular which intermediate part 242yb of the block 242, is supported and made integral with said lower part 242ya of the same block 242 defining said dosing chamber 202 of said portion of filling 15.

With particular advantage, as can be seen from said Figures 5A to 5C, said detaching means 22 of said portion of filling 15 from the respective release means, or respective release mouth, 201 of the respective portion of filling 15 comprise injecting means 222 of said puff, or jet, S of pressurized fluid, in particular compressed air, inside the respective duct 220 for conveying the puff, or jet, S of pressurized fluid, in particular air.

As can be seen from said Figures 5A to 5C, advantageously, said input means 222 of said puff, or jet, S of pressurized fluid, in particular compressed air, inside the respective duct 220 for conveying the puff, or jet, S of pressurized fluid, in particular air, comprise a corresponding elongated compartment 223, in particular provided in said support block 242 for said exiting means 24 of the respective portion of filling 15 from said release means, or respective release mouth, 201 of the respective portion of filling 15, or for the respective elongated stem 240, in particular in the corresponding intermediate part 242yb thereof, in particular on the inner surface of this block 242 facing the outer surface of said exiting means 24 of the respective portion of filling 15 from said release means, or respective release mouth, 201 of the respective portion of filling 15, or said elongated stem 240.

Particularly advantageously, as can be seen from said Figures 5A to 5C, said input means 222 of said puff, or jet, S of pressurized fluid, in particular compressed air, inside the respective duct 220 for conveying the puff, or jet, S of pressurized fluid, in particular air, comprise a corresponding transverse passage 224, obtained in said exiting means 24 of the respective portion of filling 15 from said release means, or respective release mouth, 201 of the respective portion of filling 15, or in said elongated stem 240, and in communication with said duct 220 for conveying the puff, or jet, S of pressurized fluid provided therein, and in particular opening towards or inside said elongated compartment 223 provided in the same block 242.

Advantageously, as can be seen from said Figures 5A to 5C, means are provided 225 for injecting said puff, or jet, S of pressurized fluid, in particular of compressed air, in said input means 222 of the same puff, or jet, S of pressurized fluid, inside the respective duct 220 for conveying this same puff, or jet, S of pressurized fluid.

As can be seen from said Figures 5A to 5C, advantageously, said injecting means 225 of said puff, or jet, S of pressurized fluid, in particular air, in said input means 222 of the same puff, or jet, S of fluid inside said duct 220 for conveying, comprise a corresponding passage 226, obtained in said support block 242 for said exiting means 24 of the respective portion of filling 15 from said release means, or respective release mouth, 201 of the respective portion of filling 15, or for the respective elongated stem 240, or in said intermediate part 242yb thereof, and opening into said elongated compartment 223 provided in the same support block 242. At said passage 226 as illustrated, a corresponding attachment coupling 227 is provided for a corresponding tube connecting to a source of pressurized fluid, in particular compressed air.

Advantageously, as can be seen from said Figures 5A to 5C, said elongated compartment 223, provided in said block 242 for guiding and sliding for said elongated stem 240, has a length corresponding to or greater than the length of the stroke of said exiting means 24 of the respective portion of filling 15 from said release means, or respective release mouth 201 of the respective portion of filling 15, or corresponding to or greater than the longitudinal stroke of said elongated filling stem 240.

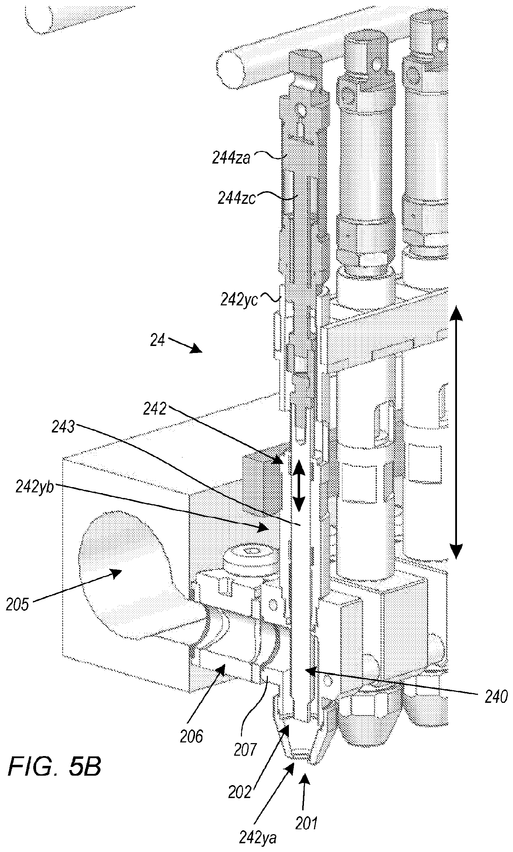

Advantageously, as can be seen from said Figures 5A and 5B, activation means 244 are provided for said exiting means 24 of the respective portion of filling 15 from said release means, or respective release mouth 201 of the respective portion of filling 15, in particular for activating the movement of said elongated stem 240 for opening and closing the respective release means, or respective release mouth 201 of the respective portion of filling 15.

As can be seen from said Figures 5A and 5B, advantageously, said activating means 244 of said exiting means 24 of the respective portion of filling 15 from said release means, or respective release mouth 201 of the respective portion of filling 15, in particular for activating the movement of said elongated stem 240 for opening and closing the release means, or respective release mouth 201 of the respective portion of filling 15, are defined by, or are in the form of, corresponding fluid activating means, in particular of the pneumatic type, and in particular comprising a respective cylinder 244za, movably housing a respective piston 244zb, from which a corresponding axially movable shaft 244zc protrudes, which is connected, in particular in an integral manner, to said exiting means 24 of the respective portion of filling 15 from said release means, or respective release mouth 201 of the respective portion of filling 15, or to said elongated stem 240, in particular, as it can be seen from said Figures 5A and 5B, at the end thereof which is opposite to the shutter one of the respective release mouth 201 of the respective portion of filling 15.

In particular, the control means, in particular of the processor type, of the apparatus are adapted to control said activating means 244, or said piston 244zb, to move with alternating motion, said exiting means 24 of the respective portion of filling 15 from said release means, or respective release mouth, 201 of the respective portion of filling 15, or the corresponding elongated shutter stem 240, between said lowered position, of closure of said release means, or respective release mouth, 201 of the respective portion of filling 15, and said raised position, of opening of the same release means, or respective release mouth, 201 of the respective portion of filling 15, with consequent release of the respective portion of filling 15.

With advantage, as can be seen from said Figures 5A to 5C, said activating means 244 of said exiting means 24, are supported by an extreme upper part 242yc of said support block 242 for said exiting means 24 of the respective portion of filling 15 from said release means, or respective release mouth 201, or for the respective elongated stem 240, which is in particular supported and made integral with said intermediate part 242yb of the same block 242 defining the support and guide means of said elongated shutter stem 240.

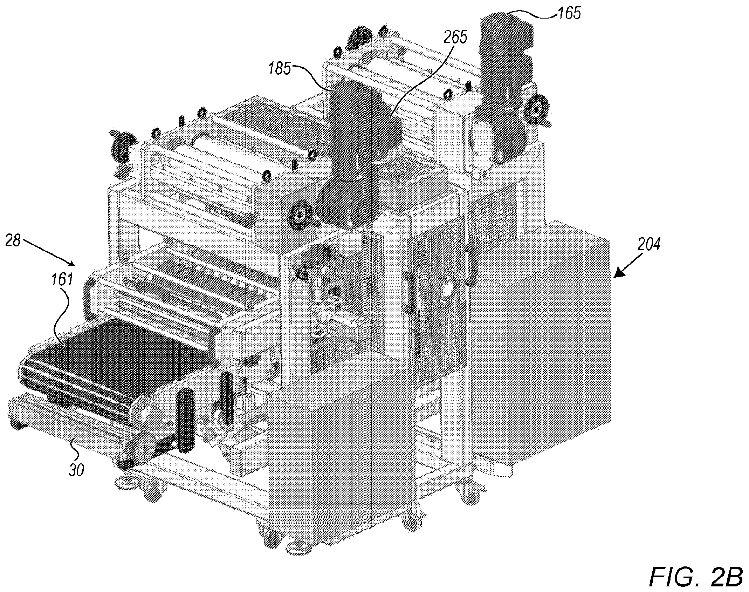

Advantageously, as can be seen from Figure 2B, said feeding means are provided, in particular under pressure, of the filling 15 in said dosing chamber 202 of said portion of filling 15 and/or towards said release means, or respective release mouth 201 of the respective portion of filling 15 comprise respective pumping means 204, which are however not particularly illustrated in the attached figures and are in any case housed within a corresponding cabinet of the apparatus.

As can be seen from said figures, advantageously, said feeding means, in particular under pressure, of the filling 15 in said dosing chamber 202 of said portion of filling and towards said release means, or respective release mouth 201 of the respective portion of filling 15 comprise a respective collector chamber 205, in particular extending transversely, in communication with the respective dosing chamber 202 of said portion of filling 15, in particular of the respective dosing member 201xa.

With particular advantage, said feeding means, of the filling 15, i.e. said pumping means 204, are adapted to feed under pressure said filling in said collector chamber 205.

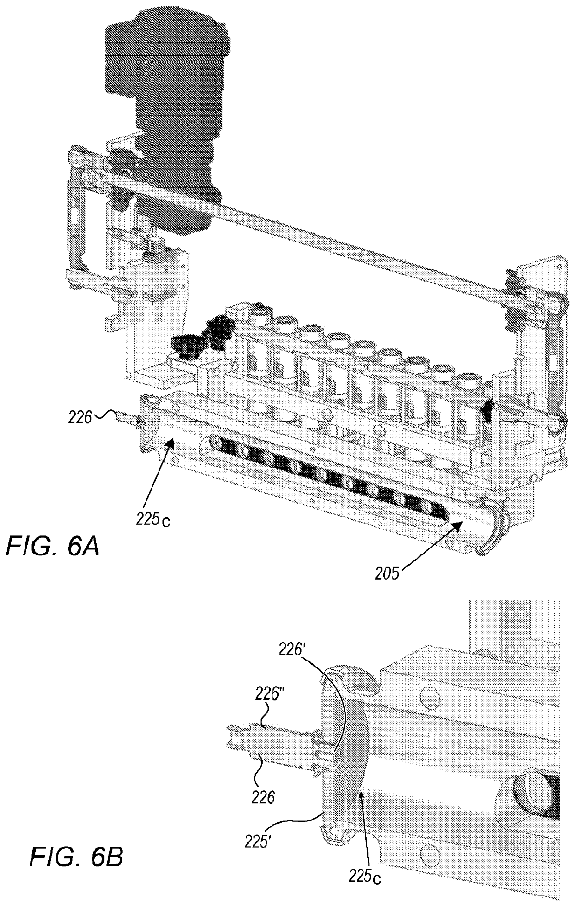

With particular advantage, as can be clearly seen from Figures 6A and 6B, means 226 are provided for detecting the pressure of the filling, in particular at said collector chamber 225c, which means for detecting the pressure of the filling 226 are, as illustrated, preferably arranged within the same collector chamber 225c.

Advantageously, as illustrated, the means for detecting the pressure of the filling 226 is at a respective end of said collector chamber 225c, especially at an end of said collector chamber 225a which is located upstream according to the direction of introduction of the same filling within the same collector chamber 225c.

In particular, as illustrated, the means for detecting the pressure of the filling 226 is provided in a transverse wall 225' of the same collector chamber 225, preferably in a central position to said transverse wall and has a respective face, or portion, 226', which is located, or is facing, within said collector chamber 225, in particular with the portion 226" of the same sensor 226 which is opposite to the one at the inside of the collector chamber which is projecting, outwards, from the same transverse wall 225'.

Advantageously, control means, in particular processor means, preferably of the apparatus, are configured in such a way that the pressure exerted on the filling by said feeding means, or the thrust pressure of said pumping means 204, is determined, or varied, according to the pressure detected by said means for detecting the pressure of the filling 226.

As can be seen from said Figures 5A to 5C, in a particularly advantageous manner, said collector chamber 205 is in communication with the respective dosing chamber 202 of said portion of filling 15 by means of corresponding valve means 206 which regulate the flow of said filling towards the respective dosing chamber 202, in particular said valve means 206 being provided in a corresponding duct, in particular horizontal, 207 connecting said collector chamber 205 in communication with the respective dosing chamber 202 of said portion of filling 15.

Advantageously, as can be seen from said figures, said means 14 for feeding said outer layer 13 of said filled food product 11, in particular said first means 16 for feeding a first sheet, or layer, or first sheet of pasta 27, comprise a respective support plane, or conveyor belt, 161, on which said outer layer 13, or said first sheet, or layer, or first sheet of pasta 27 rests.

Particularly advantageously, as can be seen from said figures, said means 14 for feeding said outer layer 13 of the filled food product 11, in particular said first means 16 for feeding a first sheet, or layer, or first sheet of pasta 27, comprise corresponding supply means 163 of said outer layer 13, in particular of said first sheet, or layer, or first sheet of pasta 27, in particular comprising corresponding advancement means, especially of the type with opposite rollers 164, 164 preferably rotated by a corresponding motor 165, in particular supported at the top in the same supply unit 163 and thus feeding said outer layer 13, in particular said first sheet, or layer, or first sheet of pasta 27, on said support plane or conveyor belt 161 supporting the same.

As can be seen from said figures, advantageously, said supply means 163 of said outer layer 13, in particular of said first sheet, or layer, or first sheet of pasta 27, comprise means 164, 164 for determining the thickness of said outer layer 13, in particular of said first sheet, or layer, or first sheet of pasta 27, in particular comprising a first and a second roller 164, 164 which are opposed to each other and whose reciprocal distance is adjustable, and between which first and second rollers 164, 164 said outer layer 13, in particular said first sheet, or layer, or first sheet of pasta 27 is passed, which is then, as reported, fed on said support plane or conveyor belt 161 supporting the same.

Advantageously, as can be seen from said figures, said second means 18 for feeding said second sheet, or layer, or second sheet of pasta, 29, comprise corresponding supply means 183 of said second sheet, or layer, or second sheet of pasta, 29, in particular comprising corresponding advancement means, especially of the type with opposite rollers 184, 184, preferably rotated by a corresponding motor 185, in particular supported at the top in the same supply unit 183 and thus feeding said second sheet, or layer, or second sheet of pasta, 29, on said support plane or conveyor belt 161 supporting the same, overlapping said first sheet, or layer, or first sheet of pasta 27, with the interposition of corresponding portions of filling 15.

Advantageously, as can be seen from said figures, said supply means 183 of said second sheet, or layer, or second sheet of pasta, 29, comprise means 184, 184 for determining the thickness of said second sheet, or layer, or second sheet of pasta, 29, in particular comprising a first and a second roller 184, 184 opposed to each other and whose reciprocal distance is adjustable, and between which first and second rollers 184, 184 said second sheet, or layer, or second sheet of pasta, 29 is passed, which is then fed, as reported, on said support plane or conveyor belt 161 supporting the same above said first sheet, or layer, or first sheet of pasta 27.

As can be seen from said figures, advantageously, said support plane or conveyor belt 161 on which said outer layer 13, or in particular said first sheet, or layer, or first sheet of pasta 27 and/or said second sheet, or layer, or second sheet of pasta, 29, rests, has a transverse width such as to be able to support said outer layer 13, in particular said first sheet, or layer, or first sheet of pasta 27 and/or said second sheet, or layer, or a second sheet of pasta, 29, of such width as to be able to receive a plurality of filling portions 15, transversely aligned with each other.

In particular, corresponding supply means 163 of said outer layer 13, in particular of said first sheet, or layer, or a first sheet of pasta 27 and/or said supply means 183 of said second sheet, or layer, or second sheet of pasta, 29 have a transverse width such that they can feed said outer layer 13, in particular said first sheet, or layer, or a first sheet of pasta 27 and/or said second sheet, or layer, or second sheet of pasta, 29, respectively of such width as to be able to receive a plurality of filling portions 15, transversely aligned with each other.

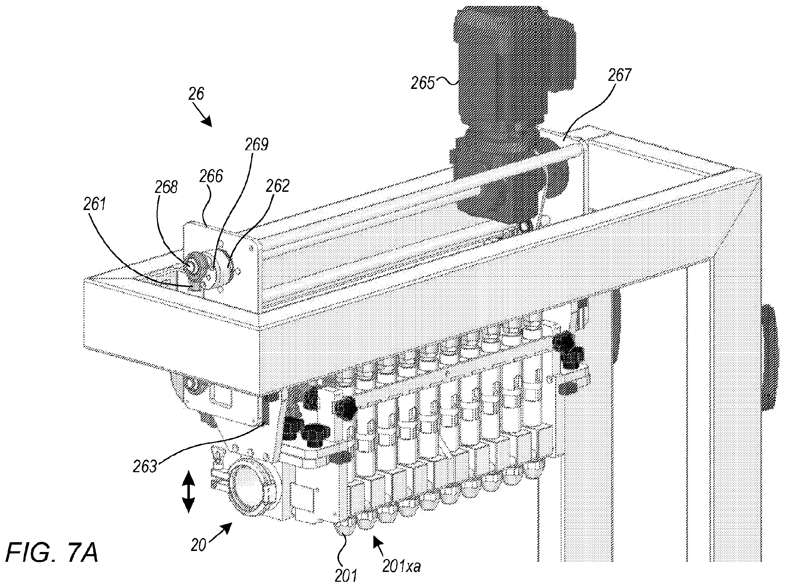

Advantageously, as can be seen from Figures 7A to 8, said release means, or respective release mouth, 201 of the respective portion of filling 15, are movable, in particular perpendicularly, with respect to said support surface or conveyor belt 161, on which said outer layer 13, or said first sheet, or layer, or first sheet of pasta 27 rests, so as to facilitate the release of a corresponding portion of filling 15.

Advantageously, as can be seen from said Figures 7A to 8, said release means, or respective release mouth, 201 of the respective portion of filling 15 are movable with respect to said support plane or conveyor belt 161 on which said outer layer 13, or said first sheet, or layer, or first sheet of pasta 27 rests, between a close position, in particular lowered, and a distant position, in particular raised, preferably so that, during the upward movement of said release means, or respective release mouth, 201 of the respective portion of filling 15, the corresponding portion of filling is gradually released 15 on the same outer layer 13, or on said first sheet, or layer, or first sheet of pasta 27.

With particular advantage, said detaching means 22 of said portion of filling 15 from the respective release means, or respective release mouth, 201 of the respective portion of filling 15 operate when said release means, or respective release mouth 201 of the respective portion of filling 15 are in the distant or raised position.

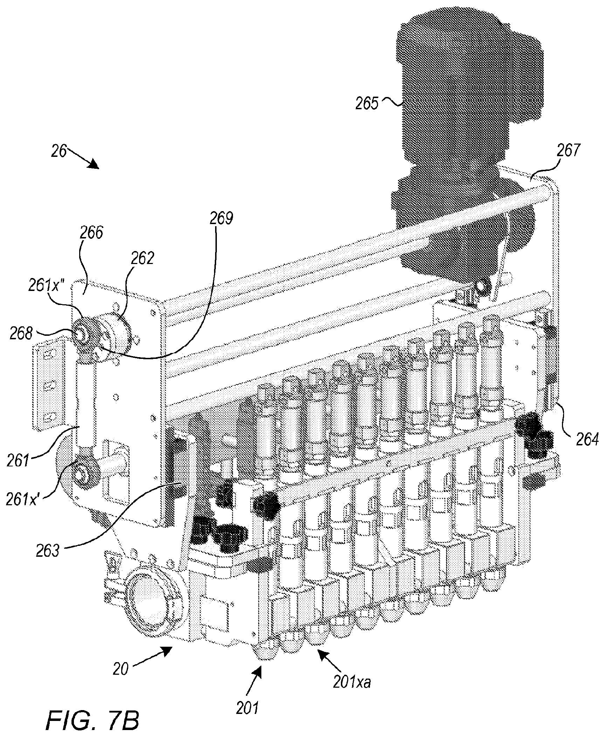

Advantageously, as can be seen from said Figures 7A and 7B, means are provided 26 for activating the relative movement of said release means, or respective release mouth, 201 of the respective portion of filling 15 with respect to said support plane or conveyor belt 161 on which said outer layer 13, or said first sheet, or layer, or first sheet of pasta 27 rests, or between said close position, in particular lowered, and said distant position, in particular raised, from the same support plane or conveyor belt 161 on which said outer layer 13, or said first sheet, or layer, or first sheet of pasta 27 rests.

Advantageously, as can be seen from said Figures 7A and 7B, said means 26 for activating the relative movement of said release means, or respective release mouth 201 of the respective portion of filling 15 with respect to said support plane or conveyor belt 161 on which said outer layer 13 rests, or said first sheet, or layer, or first sheet of pasta 27, comprise a respective connecting rod 261 having a respective end 261x' associated with, or connected to, said release means, or respective release mouth, 201 of the respective portion of filling 15,
or to said dosing means 20 of respective portions of filling 15, and/or the respective dosing member 201xa, and the other end of which 261x" is integral with a respective crank 262, which is movable in alternating rotation, according to opposite angular directions, driven by a corresponding motor 265.

As can be seen from said Figures 7A and 7B, in a particularly advantageous way, means are provided 269 which are adapted to vary the length of the stroke, in particular perpendicular, of said release means, or respective release mouth, 201 of the respective portion of filling 15, or said dosing means 20 of respective portions of filling 15, and/or the respective dosing member 201xa.

Advantageously, as can be seen from said Figures 7A and 7B, said means 269 adapted to vary the length of the stroke, in particular perpendicular, of said release means, or respective release mouth, 201 of the respective portion of filling 15, or said dosing means 20 of respective portions of filling 15, and/or the respective dosing member 201xa, comprise respective holes 269, provided, in particular peripherally, on the flange 262 defining said crank 262 and which are adapted to define corresponding attachment points for the corresponding attachment pin 268 of said connecting rod 261 to the same crank 262.

Advantageously, as can be seen from said Figures 7A and 7B, guide means 263, 264, in particular perpendicularly, or vertically extended are provided to correspondingly guide said release means, or respective release mouth 201 of the respective portion of filling 15, especially said dosing means 20 of respective portions of filling 15 to be housed inside the respective outer layer 13 of said filled food product 11, and/or the respective dosing member 201xa.

As can be seen from said Figures 7A and 7B, advantageously, said guide means 263, 264 said release means, or respective release mouth, 201 of the respective portion of filling 15, especially said dosing means 20 of respective portions of filling 15 to be housed inside the respective outer layer 13 of said filled food product 11, and/or the respective dosing member 201xa, comprise first and second guide means 263, 264 arranged at the lateral ends of the same means 20 and supported by corresponding lateral support panels perpendicularly extended 266, 267 and supported, especially in the hanging condition, by the respective frame 121 supporting the same dosing means 20.

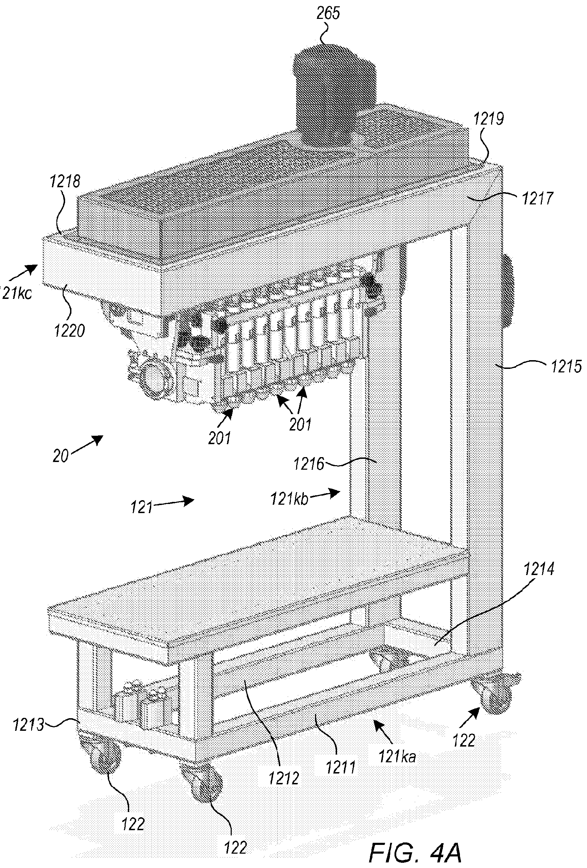

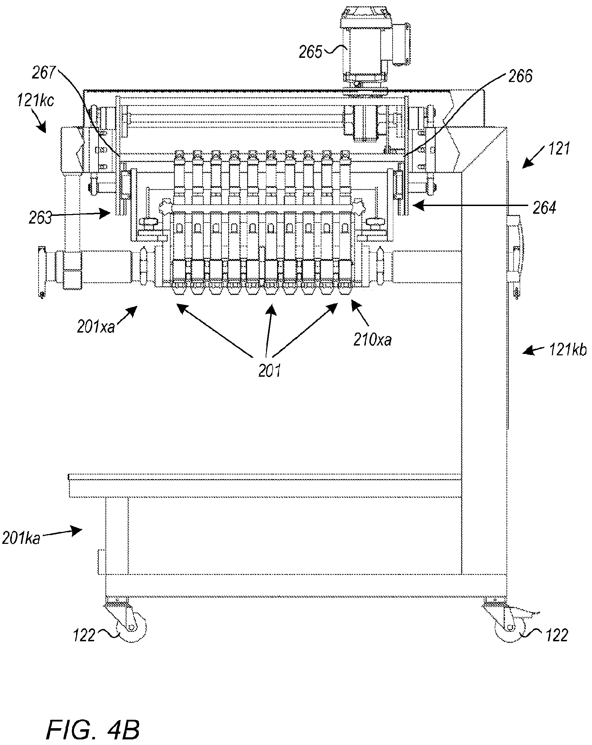

With particular advantage, as particularly shown from the Figures 4A and 4B, said dosing means 20 of respective portions of the filling 15 to be housed inside the respective outer layer 13 of said filled food product 11 are configured so that they can be associated and separated from the remaining part of the apparatus 10.

In this way, the apparatus can easily be adapted to the production needs of the moment, e.g. by changing the number of portions of filling being distributed.

Advantageously, as can be seen from said Figures 4A and 4B, said dosing means 20 of respective portions of filling 15 to be housed inside the respective outer layer 13 of said filled food product 11 comprise a respective support frame 121, in particular associable and separable with respect to the remaining part of said apparatus 10, i.e. to said main support frame 12 of the apparatus.

As can be seen from said figures, with advantage, said support frame 121 of said dosing means 20 of respective portions of filling 15 is adapted to be inserted in an intermediate position of said apparatus 10, or of said main support frame 12 of the same apparatus 10, in particular between said first means 16 for feeding a first sheet, or layer, or first sheet of pasta 27, and said second means 18 for feeding a second sheet, or layer, or second sheet of pasta, 29.

Advantageously, as can be seen from said Figures 4A and 4B, said support frame 121 has movement means, in particular in the form of corresponding wheels, in particular for movement with respect to said apparatus 10, or with respect to said main support frame 12 of the same apparatus 10.

In this way, said dosing means can be associated with the apparatus particularly easily and quickly.

Particularly advantageously, as can be seen from said Figures 4A and 4B, said support frame 121, in particular shaped in the general shape of a "C", comprises a base part 121ka, in particular shaped like a small frame and having a first and second longitudinal members 1211, 1212 joined together at the respective ends corresponding first and second crosspieces 1213, 1214, from which said base part 121ka extends perpendicularly a corresponding raised part 121kb, in particular comprising a first and second upright 1215, 1216, and which supports cantilevered an upper part 121kc, in particular vertically aligned to said base part 121ka, with the interposition in use of said support plane or conveyor belt 161 on which said outer layer 13, or said first sheet, or layer, or first sheet of pasta 27, rests and also shaped like a small frame and having first and second longitudinal members 1217, 1218, which are joined together at the respective ends by corresponding first and second crosspieces 1219, 1220. Said upper part 121kc being adapted to support, in particular in the hanging condition, said dosing means 20 of respective portions of filling 15.

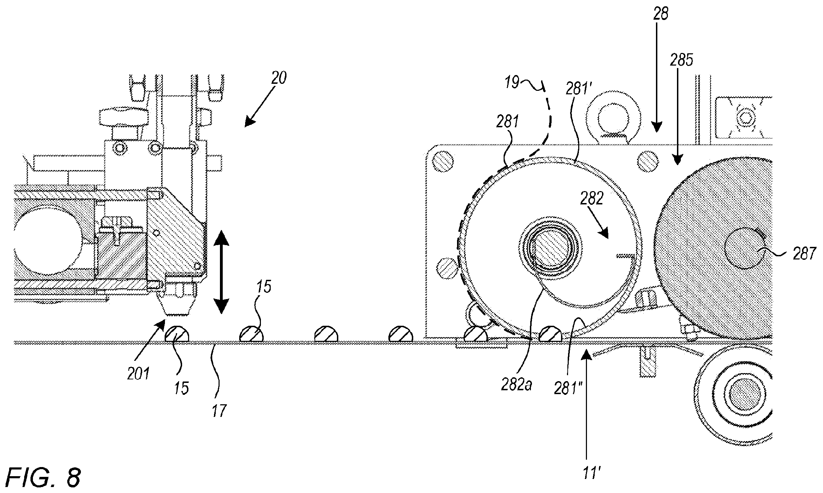

As can be seen from said figures and, in particular, from the next Figures 8 to 10, with particular advantage, means 28 are provided for forming the respective single filled food product 11, i.e., the separation thereof from the strip of filled material 11', in particular formed by said first and second sheets, or layers, or by said first and second sheets of pasta 17, 19, with said interposed portions of filling 15.

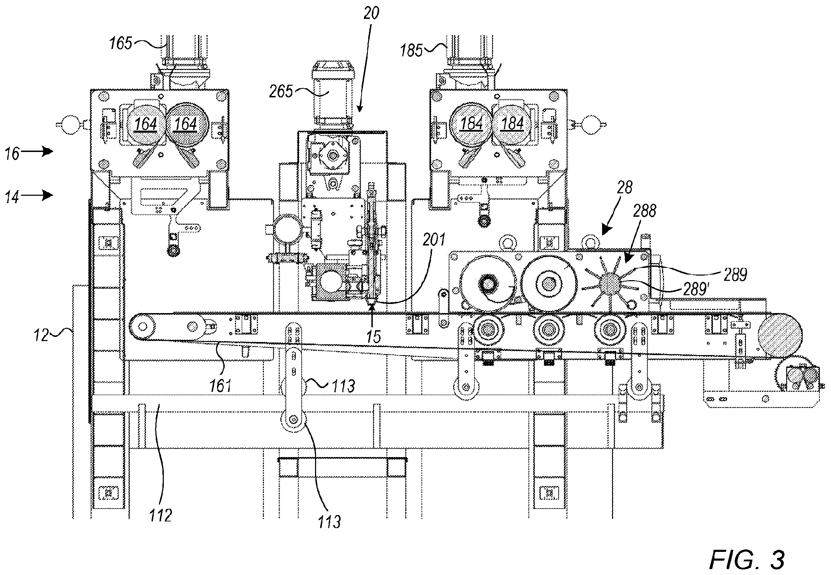

Advantageously, as can be seen from said Figures 3, 8 and 9A, said means 28 for forming the respective single filled food product 11 comprise means 281 defining the peripheral edge 17", 19" of the respective and single filled food product 11.

Advantageously, as can be seen from said Figures 3, 8 and 9A, said means 281 defining the peripheral edge 17", 19" of the respective and single filled food product 11 comprise a corresponding rotating roller 281 having a respective outer surface 281' for the engagement and crushing of said strip of filled material 11', which outer surface 281' for engagement and crushing of said roller 281 has corresponding cavities 281‴, in particular through cavities, of free passage of the central part 17', 15, 19' of the respective and single filled food product 11, beyond the same outer engagement surface 281' of the same roller 281.

As particularly shown in Figure 8, in a particularly advantageous manner, means are provided for applying said second sheet, or layer, or second sheet of pasta 29 on said first sheet, or layer, or first sheet of pasta 27, with the interposition of said portions of filling 15, which are in particular defined by said roller 281 17", 19" defining the peripheral edge of the respective and single filled food product 11.

Advantageously, as can be seen from said Figures 3, 8, 9A and 9B, said means 281 defining the peripheral edge 17", 19" of the respective and single filled food product 11 comprise detaching means 282 of the strip portion of filled material 11' from the same said means 281 defining the peripheral edge 17", 19" of the respective and single filled food product 11.

Advantageously, as can be seen from said Figures 3, 8, 9A and 9B, said detaching means of the strip portion of filled material 11' from the same said means 281 defining the peripheral edge 17", 19" of the respective and single filled food product 11 comprise a corresponding shaped surface, in particular made by a corresponding flap preferably in corresponding sheet metal, 282, which shaped surface 282 is adapted to engage the part of said strip of filled material 11' which is adapted to define the central part 17', 15, 19' of the respective and single filled food product 11 and which passes through said outer surface 281' of engagement and crushing of the same roller 281, so as to push the same part, of said strip of filled material 11', progressively and radially outwards, i.e. outside the inner part, i.e. outside the respective cavity 281‴, of the same roller 281 defining the peripheral edge 17", 19" of the respective and single filled food product 11.

As can be seen from said Figures 3, 8, 9A and 9B, advantageously, said detaching means 282 of the strip portion of filled material 11' from the same said means 281 defining the peripheral edge 17", 19" of the respective and single filled food product are located inside said roller 281 defining the peripheral edge 17", 19" of the respective and single filled food product 11 and are adapted to engage said central part 17', 15, 19' of the respective and single filled food product 11 downstream of the area of engagement and crushing of the corresponding peripheral edge 17", 19" 11.

Advantageously, can be seen from said Figures 3, 8, 9A and 9B, said detaching means 282 of the strip portion of filled material 11' from the same said means 281 defining the peripheral edge 17", 19" of the respective and single filled food product 11 has a respective end 282' integral with a corresponding support shaft 282a coaxial to said roller 281 defining the peripheral edge 17", 19" of the respective and single filled food product 11 and extend at or near the inner surface 281" of said peripheral wall defining said outer surface 281' of the same roller 281 defining the peripheral edge 17", 19" of the respective and single filled food product 11.

Advantageously, as can be seen from said Figures 3, 8, 9A and 9B, said detaching means 282 of the strip portion of filled material 11' from the same said means 281 defining the peripheral edge 17", 19" of the respective and single filled food product 11 comprise respective adjustment means 283.

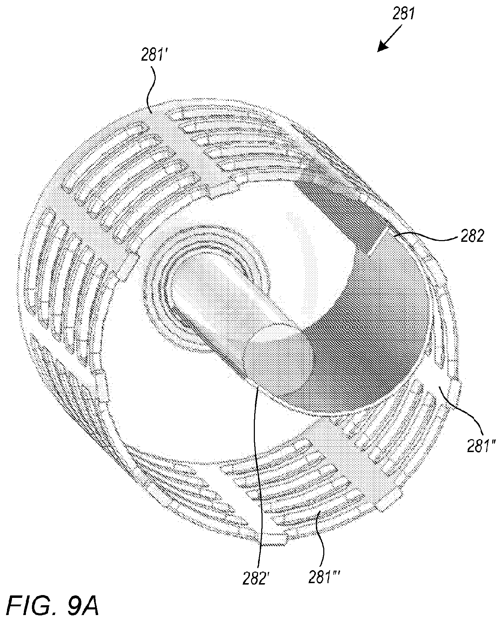

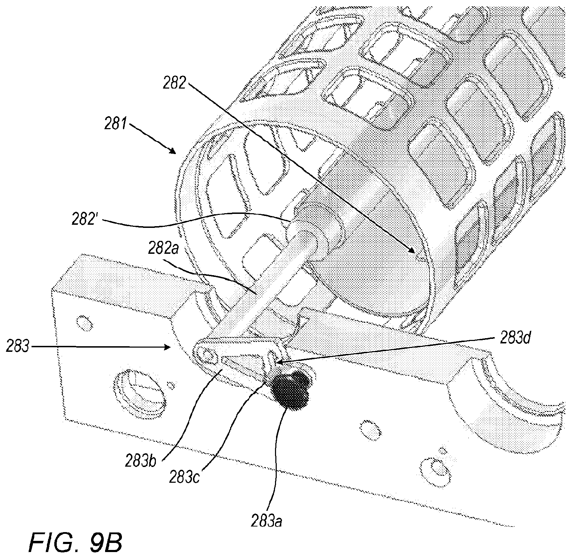

As can be seen from said Figure 9B, advantageously, said adjustment means 283 of said detaching means 282 of the strip portion of filled material 11' from the same said means 281 defining the peripheral edge 17", 19" of the respective and single filled food product 11 are adapted to position said detaching means 282 of the strip portion of filled material 11' in corresponding desired angular positions.

Advantageously, can be seen from said Figure 9B, said adjustment means 283 of said detaching means 282 of the strip portion of filled material 11' comprise a respective knob 283a, which is adapted to rotate a corresponding arm 283b and the shaft 282a supporting said detaching means 282 of the strip portion of filled material 11' to which said arm is integral, which arm 283b has a corresponding semicircular slot 283d moving with friction on a corresponding fixed pin 283c so as to position the same detaching means 282 of the strip portion of filled material 11' in a corresponding desired angular position.

With advantage, as can be seen from said Figures 3, 8 and 10, said means 28 for forming the respective single filled food product 11 comprise longitudinal cutting means 285 of the corresponding strip of filled material 11', in particular such that the longitudinal edges of the corresponding filled food products 11 are defined.

As can be seen from said Figures 3, 8 and 10, with advantage, longitudinal cutting means 285 of the corresponding strip of filled material 11' are in the form of respective rotatable means having respective circumferential cutting blades 286.

Advantageously, longitudinal cutting means 285 of the corresponding strip of filled material 11' are adapted to define longitudinal edges of the corresponding filled food products 11 having irregular shape.

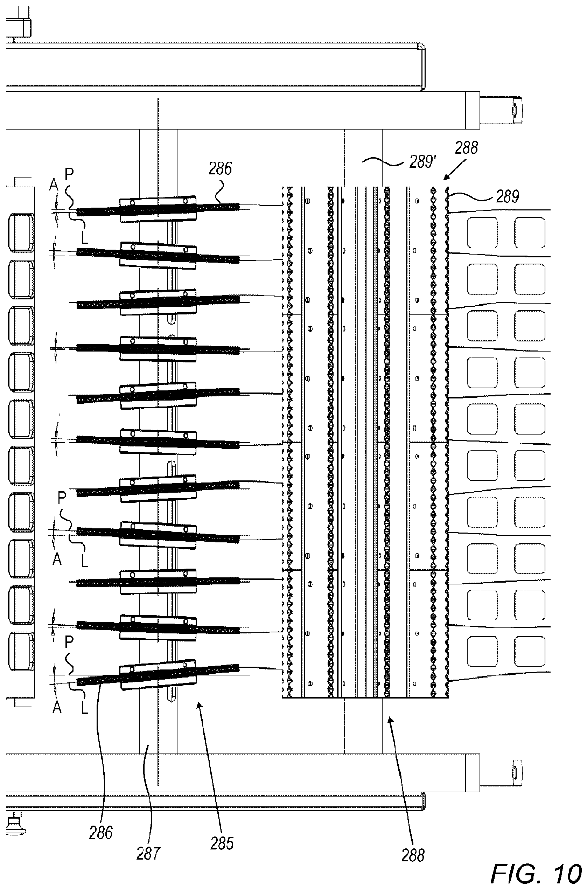

To this end, advantageously, as particularly shown from Figure 10, said longitudinal cutting means 285 of the corresponding strip of filled material 11' comprise a respective rotating shaft 287 supporting a plurality of circumferential cutting blades 286, which circumferential cutting blades 286, at least in part, extend according to a respective resting plane L which has a respective angle A of inclination with respect to a corresponding plane P perpendicular to the axis of said rotating support shaft 287.

Advantageously, as particularly shown from Figure 10, the respective angle A of inclination of the resting plane L of the respective circumferential cutting blade 286 with respect to a corresponding plane P perpendicular to the axis of said rotating support shaft 287 is between 1° and 5°.

Advantageously, as particularly shown from Figure 10, the angle A of inclination of the resting plane L of the respective circumferential cutting blade 286 is extended away from the angle A of inclination of the resting plane L of the circumferential cutting blade 286 which is adjacent to the same cutting blade 286.

Advantageously, as particularly shown from Figure 10, the angles A of inclination of the resting plane L of the circumferential cutting blades 286 with respect to the corresponding planes P perpendicular to the axis of said rotating support shaft 287 are, at least in part, different from each other.

Advantageously, as can be seen from the Figures 3 and 10, said means 28 for forming the respective single filled food product 11 comprise transverse cutting means 288 of the corresponding longitudinal strip of filled material 11', in particular such that the transverse edges of the corresponding filled food products 11 are defined.

As can be seen from Figures 3 and 10, with particular advantage, said transverse cutting means 288 of the corresponding longitudinal strip of filled material 11' comprise a rotating shaft 289' having, or supporting, a plurality of transversely extending radial cutting blades 289.

With particular advantage, as can be seen from Figure 3, said radial blades 289 of said transverse cutting means 288 of the corresponding longitudinal strip of filled material 11' have a pitch, or mutual angular distance, which is slightly different, so as to slightly vary the length of the respective and single filled food products 11.

With 30, in the figures, the respective means are illustrated, in particular in the form of a corresponding cutting roller, which are adapted to shred the discarded pasta into small pieces. As illustrated, said means, corresponding cutting roller, 30 are at a downstream end of the apparatus, in particular at and below the corresponding downstream end of the conveyor belt 161, i.e. downstream of said forming means 28.

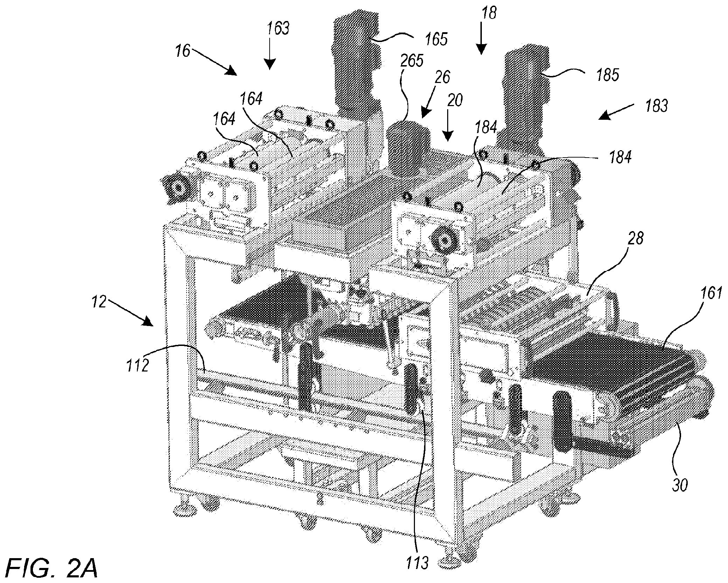

As can be seen from Figure 2A, advantageously, means 112, 113 are provided for the extraction, in particular longitudinal, of said support plane or conveyor belt 161 on which said outer layer 13, or said first sheet, or layer, or first sheet of pasta 27 rests so that it can be cleaned and/or maintained.

For this purpose, as can be seen from Figure 2A, advantageously, the support plane or conveyor belt 161 on which said outer layer 13, or said first sheet, or layer, or first sheet of pasta 27, rests, is supported by the means, or frame, 12 of support through corresponding guide means, or first and second transversely spaced, longitudinally extended guides 112, on which the same belt rests by means of respective wheels 113, in view of its longitudinal extraction, from a respective end, in particular from the upstream end of the apparatus, in order to be able to easily perform cleaning and/or maintenance thereof.

In practice, as is evident, the technical characteristics illustrated above allow, individually or in a respective combination, achieving one or more of the following advantageous results:
- it is possible to guarantee, for a large number of filling types, even those that are more adhesive and which tend not to detach or not to completely detach from the release means, the correct supply of the same filling to said outer layer or pasta and thus to obtain consistently and reliably filled food products with the most varied characteristics.
- it is possible to easily adapt the apparatus to the production needs of the moment, e.g. change the number of portions of filling being distributed;
- it allows said dosing means to be associated with the apparatus particularly easily and quickly;
- the apparatus can be easily cleaned and/or maintained.

The present invention is susceptible to evident industrial application. The person skilled in the art will also be able to imagine numerous modifications and/or variations to be made to the same invention, while remaining within the scope of the inventive concept, as extensively explained. Moreover, the person skilled in the art will be able to imagine further preferred embodiments of the invention which include one or more of the **above** illustrated characteristics of the preferred embodiment. Moreover, it must also be understood that all the details of the invention can be replaced by technically equivalent elements.

## Claims

1. Apparatus (**10**) for obtaining a filled food product (**11**), which is in the form of filled pasta, such as tortelli, ravioli or the like, comprising an outer layer (**13**) which wraps, in particular completely, a corresponding portion of said filling (**15**); preferably said outer layer (**13**) being defined, or consisting, of pasta or a sheet of pasta, and said portion of filling (**15**) being defined by, or consisting of, a corresponding creamy product; the apparatus (**10**) comprising means, or a frame, of support, (**12**) of the means (**14**) for feeding said outer layer (**13**) of said filled food product (**11**), comprising first means (**16**) for feeding a first sheet, or layer, which defines a first sheet of pasta (**27**), and second means (**18**) for feeding a second sheet, or layer, which defines a second sheet of pasta, (**29**), and means (**20**) for dosing respective portions of filling (**15**) to be housed inside the respective outer layer (**13**) of said filled food product (**11**), between said first and second layers (**17**, **19**) adapted to define said filled food product (**11**); said dosing means (**20**) comprising release means, or a respective release mouth, (**201**) of the corresponding portion of filling (**15**) on the same outer layer (**13**) of said filled food product (**11**), on said first sheet, or layer, or first sheet of pasta (**27**), of the same food product (**11**), a corresponding dosing chamber (**202**) of said portion of filling (**15**) in connection, or opening, in said release means, or respective release mouth, (**201**) of the respective portion of filling (**15**), and corresponding exiting means (**24**) of the respective portion of filling (**15**) from said release means, or respective release mouth, (**201**) of the respective portion of filling (**15**); the apparatus comprising further means (**22**) for detaching said portion of filling (**15**) from the respective release means, or respective release mouth (**201**) of the same portion of filling (**15**); **characterized in that** said detaching means (**22**) of said portion of filling (**15**) from the respective release means, or respective release mouth, (**201**) of the same portion of filling (**15**) are in the form of means which emit at least one respective puff, or jet (**S**) of pressurized fluid, in particular a puff or jet of compressed air; **in that** said exiting means (**24**) of the respective portion of filling (**15**) from said release means, or respective release mouth, (**201**) of the respective portion of filling (**15**) are in the form of means adapted to open and respectively close said release means, or respective release mouth, (**201**) of the respective portion of filling (**15**), and are movable between a respective raised opening position of said release means, or respective release mouth, (**201**) of the respective portion of filling (**15**), and a respective lowered closing position of the same release means, or respective release mouth, (**201**) of the respective portion of filling (**15**); said exiting means of the respective portion of filling (**15**) from said release means, or respective release mouth, (**201**) of the respective portion of filling (**15**) being defined by, or being in the form of, a corresponding elongated stem (**240**), which, in particular, crosses said dosing chamber (**202**) of said portion of filling (**15**), and which has a respective shaped end (**241**), capable of engaging and closing said release means, or respective release mouth, (**201**) of the respective portion of filling (**15**); and **in that** said puff, or jet (**S**), of pressurized fluid, in particular air, is emitted when the respective elongated stem (**240**) defining said exiting means (**24**) of the respective portion of filling (**15**) from said release means, or respective release mouth (**201**) of the respective portion of filling (**15**), is in the lowered position of closure of said release mouth (**201**) of the respective portion of filling (**15**).

2. Apparatus according to claim **1, characterized in that** said dosing means (**20**) of respective portions of filling (**15**) to be housed inside the respective outer layer (**13**) of said filled food product (**11**) comprise one or more, preferably a plurality, of dosing members (**201xa**) of respective portions of filling (**15**), each dosing member (**201xa**) comprising the respective release means, or release mouth (**201**) of a respective portion of filling (**15**), which are transversely aligned with each other with respect to the longitudinal direction of extension of the apparatus.

3. Apparatus to any one of the preceding claims, **characterized in that** said detaching means (**22**) of said portion of filling (**15**) from the respective release means, or respective release mouth, (**201**) of the same portion of filling (**15**) operate, i.e., emit a respective puff, or jet, (**S**) of pressurized fluid, in particular of compressed air, at said exiting means (**24**) of the respective portion of filling (**15**) from said release means, or respective release mouth, (**201**) of the respective portion of filling (**15**), or the respective free end of the same exiting means of the respective portion of filling (**15**).

4. Apparatus according to any one of the preceding claims, **characterized in that** said exiting means (**24**) of the respective portion of filling (**15**) from said release means, or respective release mouth, (**201**) of the respective portion of filling (**15**) define, or comprise, said detaching means (**22**) of said portion of filling (**15**) from the respective release means, or respective release mouth, (**201**) of the respective portion of filling (**15**).

5. Apparatus according to any one of the preceding claims, **characterized in that** said detaching means (**22**) of said portion of filling (**15**) from the respective release means, or respective release mouth, (**201**) of the respective portion of filling (**15**), in particular of the respective dosing member (**201xa**), comprise a respective duct (**220**) for conveying the puff, or jet, (**S**) of pressurized fluid, in particular of compressed air.

6. Apparatus according to claim **5, characterized in that** the respective duct (**220**) for conveying the puff, or jet, (**S**) of pressurized fluid, in particular compressed air, is obtained in the respective exiting means (**24**) of the respective portion of filling (**15**) from said release means, or respective release mouth, (**201**) of the respective portion of filling (**15**).

7. Apparatus according to any one of the preceding claims **5** and **6, characterized in that** the respective duct (**220**) for conveying the puff, or jet, (**S**) of pressurized fluid, in particular air, opens at the end, in particular shaped, (**241**) of engagement and closure of said release means, or respective release mouth, (**201**) of the respective portion of filling (**15**).

8. Apparatus according to any one of the preceding claims, **characterized in that** said dosing means (**20**) of respective portions of filling (**15**), i.e., the respective dosing member (**201xa**), comprise, or comprises, a respective support block (**242**) for said exiting means (**24**) of the respective portion of filling (**15**) from said release means, or respective release mouth, (**201**) of the respective portion of filling (**15**), i.e., for the respective elongated stem (**240**).

9. Apparatus according to any one of the preceding claims, **characterized in that** said detaching means (**22**) of said portion of filling (**15**) from the respective release means, or respective release mouth, (**201**) of the respective portion of filling (**15**) comprise injecting means (**222**) of said puff, or jet, (**S**) of pressurized fluid, in particular compressed air, inside the respective duct (**220**) for conveying the puff, or jet, (**S**) of pressurized fluid, in particular air.

10. Apparatus according to claim **9, characterized in that** said input means (**222**) of said puff, or jet, (**S**) of pressurized fluid, in particular compressed air, inside the respective duct (**220**) for conveying the puff, or jet, (**S**) of pressurized fluid, in particular air, comprise a corresponding elongated compartment (**223**), in particular provided in said support block (**242**) for said exiting means (**24**) of the respective portion of filling (**15**) from said release means, or respective release mouth, (**201**) of the respective portion of filling (**15**), or for the respective elongated stem (**240**), in particular in the corresponding intermediate part (**242yb**) thereof, in particular on the inner surface of this block (**242**) facing the outer surface of said exiting means (**24**) of the respective portion of filling (**15**) from said release means, or respective release mouth, (**201**) of the respective portion of filling (**15**), or said elongated stem (**240**).

11. Apparatus according to any one of the preceding claims **9** and **10, characterized in that** said input means (**222**) of said puff, or jet, (**S**) of pressurized fluid, in particular compressed air, inside the respective duct (**220**) for conveying the puff, or jet, (**S**) of pressurized fluid, in particular air, comprise a corresponding transverse passage (**224**), obtained in said exiting means (**24**) of the respective portion of filling (**15**) from said release means, or respective release mouth, (**201**) of the respective portion of filling (**15**), or in said elongated stem (**240**), and in communication with said duct (**220**) for conveying the puff, or jet, (**S**) of pressurized fluid provided therein, and in particular opening towards or inside said elongated compartment (**223**) provided in the same block (**242**).

12. Apparatus according to any one of the preceding claims from **9 to 11, characterized in that** means are provided (**225**) for injecting said puff, or jet, (**S**) of pressurized fluid, in particular of compressed air, in said input means (**222**) of the same puff, or jet, (**S**) of pressurized fluid, inside the respective duct (**220**) for conveying this same puff, or jet, (**S**) of pressurized fluid; in particular **in that** said injecting means (**225**) of said puff, or jet, (**S**) of pressurized fluid, in particular of air, in said input means (**222**) of the same puff, or jet, (**S**) of fluid inside said duct (**220**) for conveying, comprise a corresponding passage (**226**) obtained in said support block (**242**) for said exiting means (**24**) of the respective portion of filling (**15**) from said release means, or respective release mouth, (**201**) of the respective portion of filling (**15**), or for the respective elongated stem (**240**), or in said intermediate part (**242yb**) thereof, and opening into said elongated compartment (**223**) provided in the same support block (**242**); in particular said elongated compartment (**223**), provided in said block (**242**) for guiding and sliding for said elongated stem (**240**), having a length corresponding to or greater than the stroke length of said exiting means (**24**) of the respective portion of filling (**15**) from said release means, or respective release mouth, (**201**) of the respective portion of filling (**15**), or corresponding to or greater than the longitudinal stroke of said elongated shutter stem (**240**).

13. Apparatus according to any one of the preceding claims, **characterized in that** activation means are provided (**244**) for said exiting means (**24**) of the respective portion of filling (**15**) from said release means, or respective release mouth, (**201**) of the respective portion of filling (**15**), in particular for activating the opening and closing movement of said elongated stem (**240**) of the respective release means, or respective release mouth, (**201**) of the respective portion of filling (**15**); in particular **in that** said means (**244**) for activating said exiting means (**24**) of the respective portion of filling (**15**) from said release means, or respective release mouth, (**201**) of the respective portion of filling (**15**), in particular for activating the opening and closing movement of said elongated stem (**240**) of the respective release means, or respective release mouth, (**201**), of the respective portion of filling (**15**), are supported by an extreme upper part (**242yc**) of said support block (**242**) for said exiting means (**24**) of the respective portion of filling (**15**) from said release means, or respective release mouth, (**201**) of the respective portion of filling (**15**), or for the respective elongated stem (**240**), and is in particular supported and made integral with said intermediate part (**242yb**) of the same block (**242**) defining the support and guide means of said elongated shutter stem (**240**).

## Patentansprüche

1. Vorrichtung (10) zur Herstellung eines gefüllten Lebensmittels (11), in Form von gefülltem Teig wie Tortelli, Ravioli oder Ähnliches, umfassend eine äußere Schicht (13), die insbesondere einen entsprechenden Teil der Füllung (15), insbesondere vollständig, umschließt; wobei vorzugsweise ist die äußere Schicht (13) aus Teig oder aus einem Teigblatt definiert, oder gebildet, und wobei der Teil der Füllung (15) aus einem entsprechenden cremigen Produkt definiert, oder gebildet ist ; wobei die Vorrichtung (10) Mittel, oder einen Rahmen umfasst, zur Stützung (12) der Mittel (14) zum Zuführen der äußeren Schicht (13) des gefüllten Lebensmittels (11), umfassend erste Mittel (16) zum Zuführen eines ersten Teigblatts, oder Schicht, die ein erstes Teigblatt (27) definieren, und zweite Mittel (18) zum Zuführen eines zweiten Teigblatts, oder Schicht, die ein zweites Teigblatt (29) definieren, sowie Mittel (20) zum Dosieren von jeweiligen Teilen der Füllung (15), die in die jeweilige äußere Schicht (13) des gefüllten Lebensmittels (11) zwischen den ersten und zweiten Schichten (17, 19), die geeignet sind, den gefüllten Lebensmittel (11) zu definieren, eingebracht werden sollen; wobei die Dosierungsmittel (20) umfassen Mittel, oder eine entsprechende Öffnung (201) zum Freigeben des entsprechenden Teils der Füllung (15) auf dieselbe äußere Schicht (13) des gefüllten Lebensmittels (11) auf dem ersten Teigblatt, oder der Schicht, oder dem ersten Teigblatt (27) desselben Lebensmittels (11), mit einer entsprechenden Dosierungskammer (202) des Teils der Füllung (15), die mit den Auslösemitteln, oder mit einer entsprechenden Auslöseöffnung (201) des jeweiligen Teils der Füllung (15) verbunden ist oder in diese mündet, und mit entsprechenden Auslassmitteln (24) des jeweiligen Teils der Füllung (15) durch die Auslösemittel oder eine entsprechende Auslöseöffnung (201) des jeweiligen Teils der Füllung (15); wobei die Vorrichtung zusätzliche Mittel (22) zum Auslösen des Teils der Füllung (15) von der jeweiligen Auslösemitteln, oder von der entsprechenden Auslöseöffnung (201) desselben Teils der Füllung (15) umfasst, **dadurch gekennzeichnet, dass** die Mittel (22) zum Auslösen des Teils der Füllung (15) von den jeweiligen Auslösemitteln, oder von der entsprechenden Auslöseöffnung (201) desselben Teils der Füllung (15), die Form von Mitteln aufweisen, die mindestens einen jeweiligen Stoß, oder einen Strahl (S) von einer unter Druck stehender Flüssigkeit, insbesondere einen Stoß oder einen Strahl von Druckluft, abgeben; dass die Auslassmittel (24) des jeweiligen Teils der Füllung (15) der Auslösemittel bzw. der jeweiligen Auslöseöffnung (201) des jeweiligen Teils der Füllung (15) die Form von Mitteln aufweisen, die zum Öffnen bzw. Schließen der jeweiligen Auslösemittel bzw. der jeweiligen Auslöseöffnung (201) des jeweiligen Teils der Füllung (15) geeignet sind und zwischen einer jeweiligen angehobenen Öffnungsposition der Auslösemittel bzw. der jeweiligen Auslöseöffnung (201) des jeweiligen Teils der Füllung (15), und einer jeweiligen abgesenkten Schließposition derselben Auslösemittel bzw. der jeweiligen Auslöseöffnung (201) des jeweiligen Teils der Füllung (15) beweglich sind ; wobei die Auslassmittel (24) des jeweiligen Teils der Füllung (15) der Auslösemittel bzw. der jeweiligen Auslöseöffnung (201) des jeweiligen Teils der Füllung (15) durch einen entsprechenden länglichen Stab (240) gebildet wird bzw. dessen Form aufweist, wobei der Stab verläuft insbesondere durch die Dosierungskammer (202) des Teils der Füllung (15) und weist ein jeweiliges profiliertes Ende (241) auf, das mit den Auslösemitteln bzw. der jeweiligen Auslöseöffnung (201) des jeweiligen Teils der Füllung (15) in Eingriff kommt und diese verschließt, und dass der Stoß bzw. der Strahl (S) der unter Druck stehenden Flüssigkeit, insbesondere von Luft, wird freigesetzt, wenn sich der jeweilige längliche Stab (240), der die Auslassmittel (24) des jeweiligen Teils der Füllung (15) der Auslösemittel bzw. der jeweiligen Auslöseöffnung (201) des jeweiligen Teils der Füllung (15) bildet, in der abgesenkten Schließposition der Auslöseöffnung (201) des jeweiligen Teils der Füllung (15) bildet.

2. Vorrichtung nach Anspruch 1, **dadurch gekennzeichnet, dass** die Dosierungsmittel (20) von jeweiligen Teilen der Füllung (15), die in der jeweiligen Außenschicht (13) des gefüllten Lebensmittels (11) zu unterbringen sind, eine oder mehrere, vorzugsweise eine Vielzahl, von Dosierungselementen (201xa) von jeweiligen Teilen der Füllung (15) umfasst, wobei jedes Dosierungselement (201xa) die jeweiligen Auslösemittel, oder die jeweilige Auslöseöffnung (201) eines jeweiligen Teils der Füllung (15) aufweist, die quer zur Längsausdehnungsrichtung der Vorrichtung zueinander angeordnet sind.

3. Vorrichtung nach einem der vorhergehenden Ansprüche, **dadurch gekennzeichnet, dass** die Auslösemittel (22) des Teils der Füllung (15) von den jeweiligen Auslösemitteln, oder von der jeweiligen Auslöseöffnung, (201), desselben Teils der Füllung (15) funktionieren, d.h. ausstoßen einen Stoß, oder einen Strahl, (S) einer unter Druck stehenden Flüssigkeit, insbesondere von Druckluft, in der Nähe der Auslassmittel (24) des jeweiligen Teils der Füllung (15) von den Auslösemitteln oder von der jeweiligen Auslöseöffnung (201) des jeweiligen Teils der Füllung (15) oder vom jeweiligen freien Ende derselben Auslassmittel des jeweiligen Teils der Füllung (15) ausstößt.

4. Vorrichtung nach einem der vorhergehenden Ansprüche, **dadurch gekennzeichnet, dass** die Auslassmittel (24) des jeweiligen Teils der Füllung (15) von den Auslösemitteln bzw. von der jeweiligen Auslöseöffnung (201) des jeweiligen Teils der Füllung (15) die Auslösemittel (22) des jeweiligen Teils der Füllung (15) von den jeweiligen Auslösemitteln bzw. von der jeweiligen Auslöseöffnung (201) des jeweiligen Teils der Füllung (15) definiert bzw. umfasst.

5. Vorrichtung nach einem der vorhergehenden Ansprüche, **dadurch gekennzeichnet, dass** die Auslösemittel (22) des Teils der Füllung (15) von den jeweiligen Auslösemitteln, bzw. von der jeweiligen Auslöseöffnung (201) des jeweiligen Teils der Füllung, insbesondere des jeweiligen Dosierungselements (201xa), eine jeweilige Leitung (220) zur Förderung des Stoßes, oder des Strahls (S) von einer unter Druck stehenden Flüssigkeit, insbesondere von Druckluft, umfassen.

6. Vorrichtung nach Anspruch 5, **dadurch gekennzeichnet, dass** die jeweilige Leitung (220) zur Förderung des Stoßes, oder des Strahls (S) des unter Druck stehenden Flüssigkeit, insbesondere von Druckluft, in der jeweiligen Auslassmitteln (24) des jeweiligen Teils der Füllung (15) von den Auslösemitteln, oder von der jeweiligen Auslöseöffnung (201) des jeweiligen Teils der Füllung (15), ausgebildet ist.

7. Vorrichtung nach einem der vorhergehenden Ansprüche 5 und 6, **dadurch gekennzeichnet, dass** die jeweilige Leitung (220) zur Förderung des Stoßes, oder des Strahls (S) der unter Druck stehenden Flüssigkeit, insbesondere von Luft, am insbesondere profilierten Ende (241) des Eingriffs und des Verschlusses der Auslösemittel oder der jeweiligen Auslöseöffnung (201) des jeweiligen Teils der Füllung (15), mündet.

8. Vorrichtung nach einem der vorhergehenden Ansprüche, **dadurch gekennzeichnet, dass** die Dosierungsmittel (20) von den jeweiligen Teilen der Füllung (15), d. h. das jeweilige Dosierungselement (201xa), einen jeweiligen Stützblock (242) für die Auslassmittel (24) des jeweiligen Teils der Füllung (15) von den Auslösemitteln, oder von der jeweiligen Auslöseöffnung (201) des jeweiligen Teils der Füllung (15), d. h. für den jeweiligen länglichen Stab (240), umfasst.

9. Vorrichtung nach einem der vorhergehenden Ansprüche, **dadurch gekennzeichnet, dass** die Auslösemittel (22) des Teils der Füllung (15) von den jeweiligen Auslösemitteln, oder von der jeweiligen Auslöseöffnung (201) des jeweiligen Teils der Füllung (15), Mittel zum Einspritzen (222) des Stoßes, oder des Strahls (S) der unter Druck stehenden Flüssigkeit, insbesondere von Druckluft, in die jeweilige Leitung (220) umfassen, um den Stoß, oder den Strahl (S) der unter Druck stehenden Flüssigkeit, insbesondere von Luft, zu fördern.

10. Vorrichtung nach Anspruch 9, **dadurch gekennzeichnet, dass** die Einlassmittel (222) des Stoßes, oder des Strahls (S) der unter Druck stehenden Flüssigkeit, insbesondere von Druckluft, in die jeweilige Leitung (220) zur Förderung des Stoßes, oder des Strahls (S) der unter Druck stehenden Flüssigkeit, insbesondere von Luft, ein entsprechendes längliches Fach (223) umfassen, das insbesondere im Stützblock (242) für die Auslassmittel (24) des jeweiligen Teils der Füllung (15) aus den Auslösemitteln oder aus der jeweiligen Auslöseöffnung, (201) des jeweiligen Teils der Füllung (15), oder für den jeweiligen länglichen Stab (240), insbesondere in deren entsprechendem Mittelabschnitt (242yb), insbesondere an der der Außenfläche der Auslassmittel (242) zugewandten Innenfläche des Blocks (242), ausgebildet ist.

11. Vorrichtung nach einem der vorhergehenden Ansprüche 9 und 10, **dadurch gekennzeichnet, dass** die Einlassmittel (222) des Stoßes, oder des Strahls (S) der unter Druck stehenden Flüssigkeit, insbesondere von Druckluft, in die jeweilige Leitung (220) zur Förderung des Stoßes, oder des Strahls (S) der unter Druck stehenden Flüssigkeit, insbesondere von Luft, einen entsprechenden Querkanal (224) in den Auslassmitteln (24) des jeweiligen Teils der Füllung (15) aus den Auslösemitteln, oder in der jeweiligen Auslöseöffnung (201) des jeweiligen Teils der Füllung (15), der den länglichen Stab (240) aufweist, der mit der darin gebildeten Leitung (220) zur Förderung des Stoßes, oder des Strahls (S) in Verbindung steht, und insbesondere sich zu dem in demselben Block (242) ausgebildeten länglichen Fach (223) öffnet.

12. Vorrichtung nach einem der vorhergehenden Ansprüche 9 bis 11, **dadurch gekennzeichnet, dass** Mittel (225) zum Einspritzen des Stoßes, oder des Strahls (S) der unter Druck stehenden Flüssigkeit, insbesondere von Druckluft, in die Einlassmittel (222) desselben Stoßes, oder des Strahls (S), der unter Druck stehenden Flüssigkeit innerhalb der jeweiligen Leitung (220) zur Förderung desselben Stoßes, oder des Strahls (S), der unter Druck stehenden Flüssigkeit vorgesehen sind, insbesondere dass die Einspritzmittel (225) des Stoßes, oder des Strahls, (S) der unter Druck stehenden Flüssigkeit, insbesondere von Luft, in die Einlassmittel (222) desselben Stoßes, oder des Strahls, (S) der Flüssigkeit innerhalb der Leitung (220) zur Förderung, einen entsprechenden Kanal (226) im Stützblock (242) für die Auslassmittel (24) des jeweiligen Teils der Füllung (15) umfassen, wobei aus den Auslösemitteln, oder der jeweiligen Auslöseöffnung, (201) des jeweiligen Teils der Füllung (15) oder der jeweiligen länglichen Stabs (240) oder in dem Zwischenteil (242yb) davon, sie sich in das längliche Fach (223) im selben Stützblock (242) öffnet; insbesondere wobei das längliche Fach (223) im Block (242) dient dazu, den länglichen Stab (240) zu führen und zu verschieben, deren Länge mindestens der Hublänge der Auslassmittel (24) des jeweiligen Teils der Füllung (15) aus den Auslösemitteln, oder aus der jeweiligen Auslöseöffnung (201) des jeweiligen Teils der Füllung (15) entspricht oder größer ist als der längliche Hub der länglichen Stabes (240) des Verschlusses.

13. Vorrichtung nach einem der vorhergehenden Ansprüche, **dadurch gekennzeichnet, dass** Betätigungsmittel (244) für die Austrittsmittel (24) des jeweiligen Teils der Füllung (15) von den Auslösemitteln, oder von der jeweiligen Auslöseöffnung, (201) des jeweiligen Teils der Füllung (15) vorgesehen sind, insbesondere zur Betätigung der Öffnungs- und Schließbewegung des länglichen Stabes (240) der jeweiligen Auslösemittel, oder der jeweiligen Auslöseöffnung (201) des jeweiligen Teils der Füllung (15), insbesondere dadurch, dass die Betätigungsmittel (244) zur Aktivierung der Auslassmittel (24) des jeweiligen Teils der Füllung (15) von den Auslösemitteln, oder von der jeweiligen Auslöseöffnung, (201) des jeweiligen Teils der Füllung (15), insbesondere zur Betätigung der Öffnungs- und Schließbewegung des länglichen Stabes (240) der jeweiligen Auslösemittel, oder der jeweiligen Auslöseöffnung (201), des jeweiligen Teils der Füllung (15), von einem äußersten oberen Teil (242yc) des Stützblocks (242) für die Auslassmittel (24) des jeweiligen Teils der Füllung (15) von den Auslösemitteln, oder von der jeweiligen Auslöseöffnung, (201) des jeweiligen Teils der Füllung (15), oder des jeweiligen länglichen Stabes (240) unterstützt sind, und wobei sie insbesondere mit dem Zwischenteil (242yb) desselben Blocks (242), der die Stütz- und Führungsmittel des länglichen Stabes (240) des Verschlusses bildet, unterstützt und integral damit sind.

## Revendications

1. Appareil (10) pour obtenir un produit alimentaire fourré (11), sous forme d'une pâte fourrée, telle que des tortelli, des raviolis ou similaires, comprenant une couche extérieure (13) qui enveloppe, en particulier complètement, une portion correspondante dudit remplissage (15) ; de préférence ladite couche extérieure (13) étant définie, ou constituée, de pâtes ou d'une feuille de pâtes, et ladite portion de remplissage (15) étant définie, ou constituée, d'un produit crémeux correspondant ; l'appareil (10) comprenant des moyens, ou un cadre, de support (12) des moyens (14) pour alimenter ladite couche extérieure (13) dudit produit alimentaire fourré (11), comprenant des premiers moyens (16) pour alimenter une première feuille, ou couche, qui définit une première feuille de pâtes (27), et des deuxièmes moyens (18) pour alimenter une deuxième feuille, ou couche, qui définit une deuxième feuille de pâtes (29), et des moyens (20) pour doser des portions de remplissage (15) respectives à loger à l'intérieur de la couche extérieure (13) respective dudit produit alimentaire fourré (11), entre lesdites première et deuxième couches (17, 19) adaptées pour définir ledit produit alimentaire fourré (11) ; lesdits moyens de dosage (20) comprenant des moyens de libération, ou une bouche de libération (201) respective, de la portion correspondante de remplissage (15) sur la même couche extérieure (13) dudit produit alimentaire fourré (11), sur ladite première feuille, ou couche, ou première feuille de pâtes (27), du même produit alimentaire (11), une correspondante chambre de dosage (202) de ladite portion de remplissage (15) en connexion, ou s'ouvrant, dans lesdits moyens de libération, ou une bouche de libération (201) respective de la portion de remplissage (15) respective, et des moyens de sortie correspondants (24) de la portion de remplissage (15) respective par lesdits moyens de libération, ou la bouche de libération (201) respective de la portion de remplissage (15) respective ; l'appareil (10) comprenant des moyens supplémentaires (22) pour détacher ladite portion de remplissage (15) des moyens de libération respectifs, ou de la bouche de libération (201) respective de la même portion de remplissage (15) ; **caractérisé en ce que** lesdits moyens (22) pour détacher ladite portion de remplissage (15) des moyens de libération respectifs, ou de la bouche de libération (201) respective de la même portion de remplissage (15) ont la forme de moyens qui émettent au moins une respective bouffée, ou un jet (S) de fluide en pression, en particulier une bouffée ou un jet d'air comprimé ; que lesdits moyens de sortie (24) de la portion de remplissage (15) respective desdits moyens de libération, ou de la bouche de libération (201) respective de la portion de remplissage (15) respective ont la forme de moyens adaptés pour ouvrir et respectivement fermer lesdits moyens de libération, ou la bouche de libération (201) respective, de la portion de remplissage (15) respective et sont mobiles entre une position d'ouverture surélevée respective desdits moyens de libération, ou de la bouche de libération (201) respective de la portion de remplissage (15) respective, et une position de fermeture abaissée respective des mêmes moyens de libération, ou de la bouche de libération (201) respective de la portion de remplissage (15) respective ; lesdits moyens de sortie de la portion de remplissage (15) respective desdits moyens de libération, ou de la bouche de libération (201) respective de la portion de remplissage (15) respective étant définis par, ou ayant la forme d'une tige allongée correspondante (240), qui en particulier traverse ladite chambre de dosage (202) de ladite portion de remplissage (15), et qui a une extrémité profilée (241) respective, pouvant s'engager avec et fermer lesdits moyens de libération, ou la bouche de libération (201) respective de la portion de remplissage (15) respective, et **en ce que** la dite bouffée, ou le jet (S), de fluide en pression, en particulier air, est émise lorsque la tige allongée (240) respective définissant lesdits moyens de sortie (24) de la portion de remplissage (15) respective desdits moyens de libération, ou de la bouche de libération (201) respective de la portion de remplissage (15) respective, se trouve dans la position abaissée de fermeture de ladite bouche de libération (201) de la portion de remplissage (15) respective.

2. Appareil selon la revendication 1, **caractérisé en ce que** lesdits moyens de dosage (20) de portions de garniture (15) respectives à loger à l'intérieur de la couche extérieure (13) respective dudit produit alimentaire fourrée (11) comprennent un ou plusieurs, de préférence une pluralité, de moyens de dosage (201xa) de portions de garniture (15) respectives, chacun élément de dosage (201xa) comprenant les moyens de libération respectifs, ou la bouche de libération (201) d'une portion de garniture (15) respective, qui sont alignés transversalement les uns par rapport aux autres par rapport à la direction d'extension longitudinale de l'appareil.

3. Appareil selon l'une quelconque des revendications précédentes, **caractérisé en ce que** lesdits moyens de détachement (22) de ladite portion de garniture (15) des moyens de libération respectifs, ou de la bouche de libération (201) respective de la même portion de garniture (15) fonctionnent, c'est à dire émettent une bouffée respective, ou un jet (S) d'un fluide sous pression, en particulier d'air comprimé, près desdits moyens de sortie (24) de la portion de garniture (15) respective desdits moyens de libération, ou de la bouche de libération (201) respective, de la portion de garniture (15) respective, ou l'extrémité libre respective des mêmes moyens de sortie de la portion de garniture (15) respective.

4. Appareil selon l'une quelconque des revendications précédentes, **caractérisé en ce que** lesdits moyens de sortie (24) de la portion de garniture (15) respective desdits moyens de libération, ou de la bouche de libération (201) respective de la portion de garniture (15) respective définissent, ou comprennent, lesdits moyens de détachement (22) de ladite portion de garniture (15) des moyens de libération respectifs, ou de la bouche de libération (201) respective de la portion de garniture (15) respective.

5. Appareil selon l'une quelconque des revendications précédentes, **caractérisé en ce que** lesdits moyens de détachement (22) de ladite portion de garniture (15) des moyens de libération respectifs, ou de la bouche de libération (201) respective de la portion de garniture (15) respective, en particulier de l'élément de dosage (201xa) respectif, comprennent un conduit (220) respectif pour acheminer la bouffée, ou le jet, (S) de fluide sous pression, en particulier d'air comprimé.

6. Appareil selon la revendication 5, **caractérisé en ce que** le conduit (220) respectif pour acheminer la bouffée, ou le jet (S) de fluide sous pression, en particulier d'air comprimé, est obtenu dans les moyens de sortie (24) respectifs de la portion de garniture (15) respective desdits moyens de libération, ou de la bouche de libération (201) respective, de la portion de garniture (15) respective.

7. Appareil selon l'une quelconque des revendications précédentes 5 et 6, **caractérisé en ce que** le conduit (220) respectif pour acheminer la bouffée, ou le jet (S) de fluide sous pression, en particulier d'air, s'ouvre à l'extrémité, en particulier profilée (241) d'engagement et de fermeture desdits moyens de libération, ou de la bouche de libération (201) respective, de la portion de garniture (15) respective.

8. Appareil selon l'une quelconque des revendications précédentes, **caractérisé en ce que** lesdits moyens de dosage (20) des portions de garniture (15) respectives, c'est-à-dire l'élément de dosage (201xa) respectif, comprennent, ou comprend, un bloc de support (242) respectif pour lesdits moyens de sortie (24) de la portion de garniture (15) respective desdits moyens de libération, ou de la bouche de libération (201) respective, de la portion de garniture (15) respective, c'est-à-dire pour la tige allongée (240) respective.

9. Appareil selon l'une quelconque des revendications précédentes, **caractérisé en ce que** lesdits moyens de détachement (22) de ladite portion de garniture (15) des moyens de libération respectifs, ou de la bouche de libération (201) respective de la portion de garniture (15) respective comprennent des moyens d'injection (222) de ladite bouffée, ou du jet, (S) de fluide sous pression, en particulier d'air comprimé, à l'intérieur du conduit (220) respectif pour acheminer la bouffée, ou le jet, (S) de fluide sous pression, en particulier d'air.

10. Appareil selon la revendication 9, **caractérisé en ce que** lesdits moyens d'entrée (222) de ladite bouffée, ou du jet (S) de fluide sous pression, en particulier d'air comprimé, à l'intérieur du conduit (220) respectif pour acheminer la bouffée, ou le jet (S) de fluide sous pression, en particulier d'air, comprennent un compartiment allongé correspondant (223), en particulier formé dans ledit bloc de support (242) pour lesdits moyens de sortie (24) de la portion de garniture (15) respective desdits moyens de libération, ou de la bouche de libération (201) respective de la portion de garniture (15) respective, ou pour la tige allongée (240) respective, en particulier dans la partie intermédiaire correspondante (242yb) de celle-ci, en particulier sur la surface intérieure de ce bloc (242) faisant face à la surface extérieure desdits moyens de sortie (24) de la portion de garniture (15) respective desdits moyens de libération, ou de la bouche de libération (201) respective de la portion de garniture (15) respective, ou de ladite tige allongée (240).

11. Appareil selon l'une quelconque des revendications 9 et 10 précédentes, **caractérisé en ce que** lesdits moyens d'entrée (222) de ladite bouffée, ou du jet (S) de fluide sous pression, en particulier d'air comprimé, à l'intérieur du conduit (220) respectif pour acheminer la bouffée, ou le jet (S) de fluide sous pression, en particulier d'air, comprennent un passage transversal correspondant (224), obtenu dans lesdits moyens de sortie (24) de la partie de garniture (15) respective desdits moyens de libération, ou de la bouche de libération (201) respective de la partie de garniture (15) respective, ou dans ladite tige allongée (240), et en communication avec ledit conduit (220) pour acheminer la bouffée, ou le jet (S) de fluide sous pression formé à l'intérieur de celui-ci, et en particulier s'ouvrant vers ou à l'intérieur dudit compartiment allongé (223) formé dans le même bloc (242).

12. Appareil selon l'une quelconque des revendications précédentes de 9 à 11, **caractérisé en ce que** des moyens sont prévus (225) pour injecter ladite bouffée, ou le jet (S) de fluide sous pression, en particulier d'air comprimé, dans lesdits moyens d'entrée (222) de la même bouffée, ou du jet (S) de fluide sous pression, à l'intérieur du conduit (220) respectif pour acheminer cette même bouffée, ou jet (S) de fluide sous pression, en particulier que lesdits moyens d'injection (225) de ladite bouffée, ou du jet (S) de fluide sous pression, en particulier d'air, dans lesdits moyens d'entrée (222) de la même bouffée, ou du jet (S) de fluide à l'intérieur dudit conduit (220) pour le transport, comprennent un passage correspondant (226) obtenu dans ledit bloc de support (242) pour lesdits moyens de sortie (24) de la portion de garniture (15) respective desdits moyens de libération, ou de la bouche de libération (201) respective de la portion de garniture (15) respective, ou pour la tige allongée (240) respective, ou dans ladite partie intermédiaire (242yb) de celle-ci, et s'ouvrent dans ledit compartiment allongé (223) prévu dans le même bloc de support (242) ; en particulier ledit compartiment allongé (223), prévu dans ledit bloc (242) pour guider et faire coulisser ladite tige allongée (240), a une longueur correspondante ou supérieure à la longueur d'une course desdits moyens de sortie (24) de la portion de garniture (15) respective desdits moyens de libération, ou de la bouche de libération (201) respective de la portion de garniture (15) respective, ou correspondante ou supérieure à la course longitudinale de ladite tige d'obturateur allongée (240).

13. Appareil selon l'une quelconque des revendications précédentes, **caractérisé en ce que** des moyens d'activation sont prévus (244) pour lesdits moyens de sortie (24) de la partie de garniture (15) respective desdits moyens de libération, ou de la bouche de libération (201) respective de la partie de garniture (15) respective, en particulier pour activer le mouvement d'ouverture et de fermeture de ladite tige allongée (240) des moyens de libération respectifs, ou de la bouche de libération (201) respective, de la partie de garniture (15) respective, en particulier **en ce que** lesdits moyens (244) d'activation desdits moyens de sortie (24) de la portion de garniture (15) respective desdits moyens de libération, ou de la bouche de libération (201) respective de la portion de garniture (15) respective, en particulier pour l'activation du mouvement d'ouverture et de fermeture de ladite tige allongée (240) des moyens de libération respectifs, ou de la bouche de libération (201) respective de la portion de garniture (15) respective, sont supportés par une partie supérieure extrême (242yc) dudit bloc de support (242) pour lesdits moyens de sortie (24) de la portion de garniture (15) respective desdits moyens de libération, ou de la bouche de libération (201) respective, de la partie de garniture (15) respective, ou pour la tige allongée (240) respective, et sont en particulier supportés et rendus solidaires de ladite partie intermédiaire (242yb) du même bloc (242) définissant les moyens de support et de guidage de ladite tige d'obturateur allongée (240).
